# EUROPÄISCHE PATENTSCHRIFT

(11) **EP 2 555 896 B1**
(45) Veröffentlichungstag und Bekanntmachung des Hinweises auf die Patenterteilung: **18.02.2015**
(21) Anmeldenummer: 10718835.1
(22) Anmeldetag: 07.04.2010
(51) Int. Cl.: B23G 1/32

(54) **VORRICHTUNG ZUM BEARBEITEN EINES STILL STEHENDEN WERKSTÜCKS**
DEVICE FOR PROCESSING STATIONARY WORKPIECE
DISPOSITIF POUR USINER UNE PIÈCE IMMOBILE

(43) Veröffentlichungstag der Anmeldung: 13.02.2013
(73) Patentinhaber: K.R. Pfiffner AG, Utzenstorf, 3427 Utzenstorf (CH)
(72) Erfinder: OP DE HIPT, Michael, CH-2533 Evilard (CH); RODER, Beat, CH-3315 Bätterkinden (CH)
(74) Vertreter: EGLI-EUROPEAN PATENT ATTORNEYS
(86) Internationale Anmeldenummer: PCT/CH2010/000089
(87) Internationale Veröffentlichungsnummer: WO 2011/123958

(56) Entgegenhaltungen:
- WO-A1-2004/067216
- DD-A1- 202 643
- DE-A1-102007 060 554
- US-A1- 2004 081 519

## Beschreibung

Die Erfindung betrifft eine Vorrichtung zum Bearbeiten eines stehenden Werkstücks nach Anspruch 1. Die Erfindung betrifft weiterhin ein Verfahren zum Bearbeiten eines stehenden Werkstücks nach Anspruch 12 und eine bevorzugte Verwendung der erfindungsgemässen Vorrichtung nach Anspruch 17.

Als Fräsen wird üblicherweise ein spanendes Fertigungsverfahren mit einem rotierenden, meist mehrschneidigen Werkzeug - einem Fräser - bezeichnet, das eine kreisförmige Schnittbewegung durchführt und einer vom Werkstück oder Fräser durchgeführten Vorschub- und Zustellbewegung. Die Vorschubbewegung kann eben oder eine beliebige räumliche Bahnkurve sein, was auch eine grosse Vielzahl an Werkstückformen begründet.

Als Drehen wird dagegen ein Trennverfahren für Metalle oder - seltener - auch Kunststoffe bezeichnet, das manuell auf einer Drehbank oder automatisiert auf einer Drehmaschine durchgeführt wird. Im Gegensatz zum Fräsen bewegt sich hier das Werkstück beziehungsweise Halbzeug und das fest eingespannte Werkzeug (Drehmeissel) steht still. Nur in besonderen Fällen, beispielsweise beim Gewindewirbeln, bewegt sich auch das Werkzeug.

Eine Vorrichtung gemäß dem Oberbegriff des Anspruchs 1 ist aus EP 2 090 389 A1 bekannt.

Ein Verfahren gemäß dem Oberbegriff des Anspruchs 12 ist auch aus EP 2 090 389 A1 bekannt.

Das Gewindewirbeln stellt deshalb eine Kombination aus Fräsen und Drehen dar, und wird zur Herstellung von Innenwie auch von Aussengewinden benutzt. Die Vorzüge des Gewindewirbelns sind insbesondere durch die Präzision und Schnelligkeit begründet, in der ein solches Gewinde herstellbar ist. Da allerdings sowohl das Werkzeug als auch das Werkstück bewegt werden müssen, ist das Gewindewirbeln in seiner bekannten Form technisch aufwändig und teuer. Insbesondere lässt sich eine automatisierte Fertigung an aufeinander folgenden Bearbeitungsstationen, z.B. in Lang- oder Rundautomaten, nicht realisieren, da diese die Zuführung eines jeweils stehenden Werkstücks erfordern. Ein reines Fräsen der Gewinde am stehenden Werkstück scheiterte bislang an der Komplexität seiner technischen Realisierung.

Ein Vorteil der vorliegenden Erfindung besteht in der einfachen, flexiblen und effizienten Herstellung beliebiger Aussengewinde an stehenden Werkstücken zulässt, die zudem kostengünstig zu realisieren ist.

Dieser Vorteil wird durch eine Vorrichtung nach Anspruch 1 erzielt.

Ein wesentlicher Punkt der erfindungsgemässen Vorrichtung besteht dabei darin, dass ein am Fräskopf erfindungsgemäss gekipptes Fräswerkzeug bei Drehung des Fräskopfs nicht nur um dessen Längsachse kreist, sondern zudem in eine Taumelbewegung versetzt wird. Bei gleichzeitigem Vorschub des Fräskopfs wandert damit das Fräswerkzeug nicht nur in einer spiralförmigen Bewegungsbahn um das Werkstück herum, sondern ist in jeder Bahnposition auch immergleich ausgerichtet. Dies ist aber die Voraussetzung dafür, dass überhaupt ein Aussengewinde gefräst werden kann, da anderenfalls das Fräswerkzeug bei Vorschub blockieren würde. Gleichzeitig wird es möglich, über eine entsprechende Profilgebung der Fräszähne beliebige Gewindeprofile herzustellen. Damit ist eine besonders einfache und flexible, dabei gleichzeitig effiziente und präzise Herstellung von Aussengewinden jeglicher gewünschten Steigung und Profilgebung möglich. Das bearbeitete Werkstück muss dabei auch nicht notwendigerweise einen kreisförmigen Querschnitt haben, sondern kann auch jede andere Querschnittsform aufweisen, an deren Umfang wenigstens abschnittsweise ausgebildete Gewindebahnen entstehen sollen.

Vorteilhafte Ausführungsformen der Vorrichtung sind in den Unteransprüchen angegeben.

So kann zum Beispiel in einer bevorzugten Ausführungsform der Vorrichtung vorgesehen sein, dass die Drehachse des Fräswerkzeugs zudem in einem vorbestimmten zweiten Winkel aus der Richtung der gekippten Drehachse heraus um eine zweite Achse geneigt ist, die in Umfangsrichtung des Werkzeugs durch den besagten Arbeitspunkt verläuft. Eine derart geneigte Drehachse macht zum Beispiel die Herstellung von hinterschnittenen Gewinden an einem Werkstück möglich, so dass Schraubverbindungen mit besonders hoher Zugfestigkeit herstellbar sind.

Grundsätzlich kann das Fräswerkzeug zum Beispiel als Fräser mit an dessen Aussenumfang liegenden Arbeitspunkt ausgeführt sein, der umlaufend um das Werkstück geführt wird. Bevorzugt ist es aber, wenn das Fräswerkzeug als. Wirbelring ausgebildet ist, und die Längsachse des Fräskopfs die Öffnungsfläche des Wirbelrings beabstandet zu dessen Drehachse durchtritt, so dass der Arbeitspunkt des Rings an dessen Innenumfang liegt. Das Werkstück wird dabei von dem Ring umgriffen, wobei dessen Arbeitspunkt wiederum umlaufend um das Werkstück geführt wird. Durch Verwendung eines Wirbelrings wird eine besonders einfach und kompakt zu realisierende Integration des Fräswerkzeugs in den Fräskopf möglich.

Bevorzugt ist die Vorrichtung dabei mit Antriebsmitteln versehen, über welche der Fräskopf abhängig von dem vorbestimmten ersten und/oder zweiten Winkel des Fräswerkzeugs in eine koordinierte Vorschub- und Drehbewegung versetzbar ist, so dass der Arbeitspunkt des Werkzeugs eine spiralförmige Bewegungsbahn beschreibt. Zum Herstellen von Aussengewinden unterschiedlicher Steigung und Profilgebung ist damit lediglich die Einstellung des ersten und/oder zweiten Winkels am Fräswerkzeug erforderlich. Diese wiederum ist besonders einfach dadurch möglich, indem der Fräskopf und/oder das Fräswerkzeug als jeweils austauschbare Einheit mit standardisiertem Anschluss für Antriebsmittel ausgebildet sind. Denkbar ist aber auch eine am Werkzeug selbst vorgesehene Justiervorrichtung, die ein Kippen bzw. Neigen von dessen Drehachse um den ersten und/oder zweiten Winkel ermöglicht.

Besonders präzise gefräste Aussengewinde sind dabei herstellbar, wenn die Vorrichtung mit Ausgleichsmitteln versehen ist, die zum Detektieren und Kompensieren von Abweichungen des Arbeitspunkts des Fräswerkzeugs von einer vorgegebenen Bewegungsbahn ausgelegt sind. In einer bevorzugten, technisch besonders zuverlässigen Ausführungsform ist dabei vorgehen, dass die Ausgleichsmittel eine Lagerung des Fräskopfs an Schlitten umfassen, welche in zwei senkrecht zur Längsachse des Fräskopfs stehenden Raumrichtungen verfahrbar ist.

Der Vorteil der vorliegenden Erfindung wird auch durch eine Station nach Anspruch 10 erreicht.

Ein wesentlicher Punkt der erfindungsgemässen Station besteht darin, dass das Werkstück nicht drehbar gelagert zu sein muss, um selbst anspruchsvolle Aussengewinde daran anzubringen. Dadurch entfallen entsprechende motorische Antriebe, welche eine Zu- und Weiterführung des Werkstücks zu der Vorrichtung behindern oder wenigstens stark verkomplizieren würden, in jedem Fall aber deutlich mehr Raumbedarf erfordern und zudem teuer machen würden. Eine solche Station ist damit für eine stark automatisierte Fertigung von Bauteilen besonders geeignet.

Besonders bevorzugt ist bei einer solchen Station eine Längsachse des Werkstücks auf eine Längsachse des Fräskopfs ausgerichtet, womit wenigstens teilweise umlaufende Aussengewinde am Werkstück herstellbar sind, wie sie z.B. Zahnstangen erwünscht sind.

Der Vorteil der vorliegenden Erfindung ist auch durch ein System zur getakteten Bearbeitung von stehenden Werkstücken nach Anspruch 12 erzielbar.

Ein wesentlicher Punkt des erfindungsgemässen Systems besteht darin, dass neben anderen Bearbeitungsvorgängen am stehenden Werkstück erstmals auch ein Aussengewinde daran herstellbar ist.

Obwohl ein solches System zum Beispiel als Langautomat ausgeführt sein kann, ist es allein schon aus Platz- und Kostengründen bevorzugt, es als Rundtaktautomat auszubilden.

Zudem kann der Vorteil der vorliegenden Erfinddung auch durch ein Verfahren nach Anspruch 13 erreicht werden.

Ein wesentlicher Punkt des erfindungsgemässen Verfahrens besteht dabei darin, dass es eine umlaufend gleichbleibende Ausrichtung des Fräswerkzeugs in Richtung seiner spiralförmigen Bewegungsbahn erlaubt. Erst dadurch ist - wie bereits vorstehend erläutert - das Fräsen eines Aussengewindes an einem Werkstück möglich. Gleichzeitig erlaubt das Verfahren eine leichte technische Realisierung mit den weiteren schon benannten Vorzügen.

Vorteilhafte Ausführungsformen des Verfahrens sind in den Unteransprüchen angegeben.

Danach wird in einer bevorzugten Ausprägung des erfindungsgemässen Verfahrens das rotierende Fräswerkzeug in eine Taumelbewegung versetzt, so dass entlang der gesamten Bewegungsbahn eine Drehachse des Werkzeugs aus einer Richtung der gekippten Drehachse heraus zudem um einen vorbestimmten zweiten Winkel um eine zweite Achse geneigt ist, die in Umfangsrichtung des Werkzeugs durch den besagten Arbeitspunkt verläuft. Dies ermöglicht - neben der Vorgabe einer bestimmten Steigung über den ersten Winkel - die Anbringung eines Hinterschnitts über den zweiten Winkel.

Dabei muss der Arbeitspunkt des Werkzeugs nicht notwendigerweise über den gesamten Umfang des Werkstücks in dessen Material eingreifen. Das Werkstück kann auch so zu dem Fräswerkzeug ausgerichtet und feststehend gehalten werden, dass der besagte Arbeitspunkt wenigstens an einem Teilumfang des Werkstücks spanabhebend in dessen Material eintritt. Damit sind auch Teilgewinde an einem Werkstück herstellbar, wie sie zum Beispiel an Zahnstangen benötigt werden.

Zur Herstellung unterschiedlicher Aussengewinde ist es dabei vorteilhaft, wenn der erste und/oder der zweite Winkel des Fräswerkzeugs durch Austauschen eines Fräskopfs eingestellt wird, an dem das Werkzeug drehbar gelagert gehalten ist. Dies ermöglicht im Bedarfsfall einen schnellen Wechsel des Werkzeugs und schliesst gleichzeitig Fehler durch manuelles Einstellen des ersten und/oder zweiten Winkels des Werkzeugs am Fräskopf aus. In bevorzugter Weise wird dabei mit dem ersten Winkel des Fräswerkzeugs eine Gewindesteigung und/oder mit dem zweiten Winkel des Fräswerkzeugs ein Gewindeprofil eingestellt, das an dem Werkstück gefräst werden soll.

Die erfindungsgemässe Vorrichtung soll dabei bevorzugt zum Gewindeschneiden von Schrauben, insbesondere von Knochen- und/oder Holzschrauben Verwendung finden, womit sowohl deren Produktionszeiten wie auch deren Qualität erheblich verbessert werden können.

Die Erfindung wird im Folgenden unter Bezugnahme auf die beigefügten Figuren detailliert erläutert. Gleiche oder gleichwirkende Teile sind mit gleichen Bezugsziffern bezeichnet. Es zeigen:
- Figur 1: eine Prinzipskizze einer erfindungsgemässen Vorrichtung zum Bearbeiten eines feststehenden Werkstücks, mit einem Fräskopf und einem daran exzentrisch gehaltenen, drehbar gelagerten Fräswerkzeug;
- Figur 2: eine Seitenansicht einer erfindungsgemässen Station zur Bearbeitung eines feststehenden Werkstücks;
- Figur 3: eine räumliche Ansicht der erfindungsgemässen Vorrichtung der Figur 2 mit einem Antriebsmittel von schräg oben gesehen;
- Figur 4: eine geschnittene Seitenansicht eines erfindungsgemässen Systems zum Bearbeiten eines stehenden Werkstücks, und
- Figur 5: eine Draufsicht auf das System der Figur 4 mit einer darin sichtbaren Station der Figur 2.

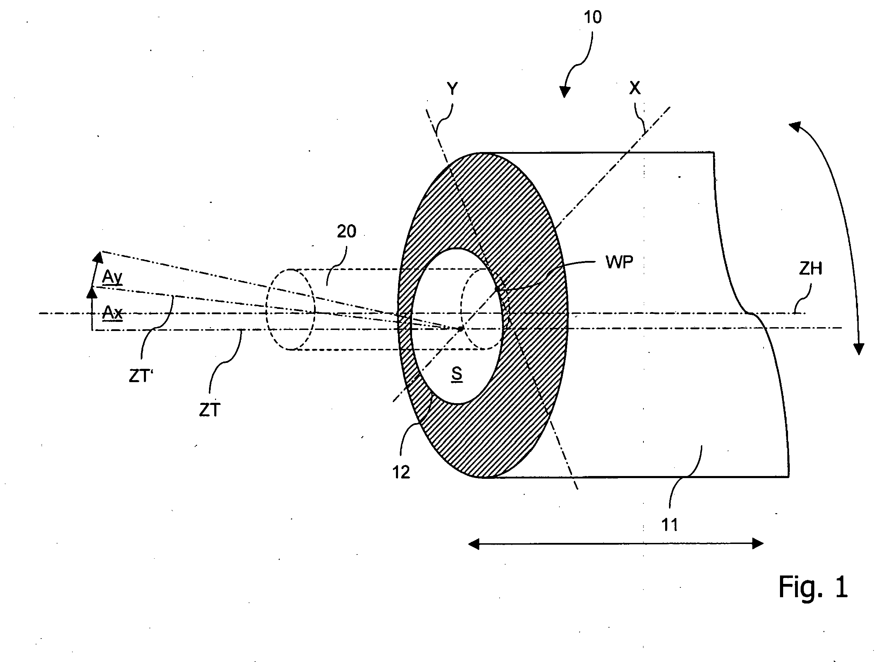

Die Figur 1 zeigt eine Prinzipskizze einer erfindungsgemässen Vorrichtung 10 zum Bearbeiten eines feststehenden Werkstücks 20, mit einem Fräskopf 11 und einem daran exzentrisch gehaltenen, drehbar gelagerten Fräswerkzeug, das hier als Wirbelring 12 ausgeführt sein soll. Der Fräskopf 11 ist in Richtung der angebrachten Pfeile drehbar um seine Längsachse ZH (Z-axis tool Head) gelagert und linear zum Werkstück 20 hin und von diesem weg verfahrbar. Seine Längsachse (ZH) durchmisst in einem Abstand zur Drehachse ZT die Öffnungs- oder Arbeitsfläche S (Surface) des Wirbelrings 12. In diesem Beispiel fällt seine Längsachse ZH zudem mit einer Längsachse des Werkstücks 20 zusammen, an dem ein komplett umlaufendes Aussengewinde gewirbelt werden soll.

Dazu ist der Wirbelring 12 aus einer Richtung seiner Drehachse ZT (Z-Axis cutting Tool) in einem ersten (Schnitt)Winkel Ax (Angle X-axis) um eine erste (Schnitt)Achse X gekippt, welche in radialer Richtung des Wirbelrings 12 durch eine Arbeitspunkt WP (Working Point) verläuft, welcher der Längsachse ZH jeweils am nächsten liegt. Der Schnittwinkel Ax gibt dabei die Steigung des zu schneidenden Gewindes vor.

Der Wirbelring 12 ist zudem aus der Richtung der gekippten Achse ZT' in einem zweiten (Schnitt)Winkel Ay (Angle Y-axis) um eine zweite (Schnitt)Achse Y geneigt, welche in Umfangsrichtung des Wirbelrings 12 durch dessen Arbeitspunkt WP verläuft. Grundsätzlich ist dabei über eine entsprechende Profilgebung der Fräszähne (nicht gezeigt) des Wirbelrings 12 ein entsprechendes Gewindeprofil einstellbar. Der Schnittwinkel Ay lässt aber zusätzlich die Anbringung von Hinterschneidungen zu.

Durch koordinierte Vorwärts- und Drehbewegung des Fräskopfs 11 zum Werkstück 20 hin wird nun der in Schnittgeschwindigkeit rotierende Wirbelring 12 in eine zusätzliche Taumelbewegung versetzt. Sein Arbeitspunkt WP legt dabei eine spiralförmige Bahnkurve im Material des Werkstücks zurück. Dabei bleibt seine Stellung zum Werkstück an jedem Umfangspunkt gleich, das heisst, seine Umfangsrichtung im Arbeitspunkt WP ist immer in Richtung einer gewählten Gewindesteigung ausgerichtet. Damit kann erstmals ein Aussengewinde an einem feststehenden Werkstück 20 - hier mittels Gewindewirbeln - realisiert werden. Das Verfahren ist aber nicht auf einen Wirbelring 12 beschränkt, sondern kann auch mit einem das Werkstück 20 umlaufenden Fräser durchgeführt werden. Die Verwendung eines Wirbelrings lässt aber dessen besonders einfache und kompakte Integration in den Fräskopf 11 zu.

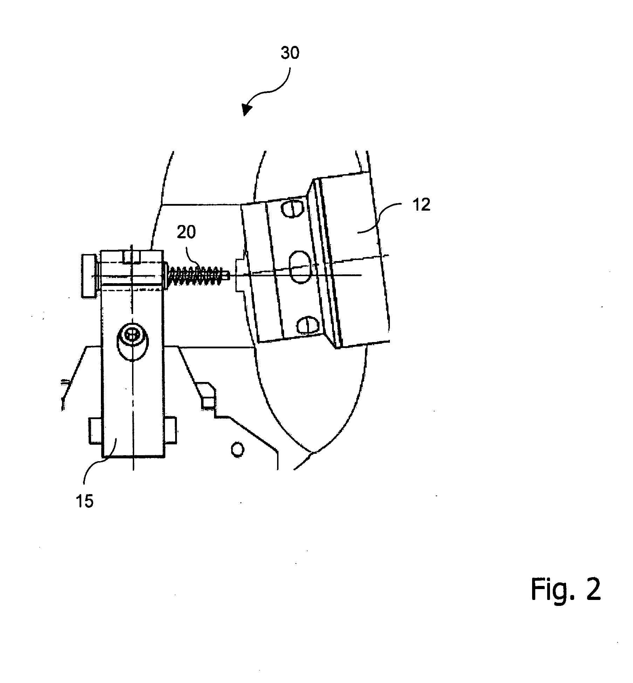

Die Figur 2 zeigt eine Seitenansicht einer erfindungsgemässen Station 30 zur Bearbeitung eines feststehenden Werkstücks 20. Die Station 30 umfasst dabei die erfindungsgemässe Vorrichtung der Figur 1, von welcher hier lediglich ihr Fräswerkzeug, also wiederum der Wirbelring 12 dargestellt ist. Zudem umfasst die Station 30 eine Haltevorrichtung 15 für das Werkstück 20, an dem bereits ein Aussengewinde gewirbelt worden ist. Der Vorteil der erfindungsgemässen Station 30 besteht dabei darin, dass sie keine Haltevorrichtung 15 erfordert, die mit einem motorischen Antrieb versehen sein muss, um das Werkstück 20 wie üblich zu drehen. Dadurch kann eine technisch einfach aufgebaute Haltevorrichtung 15 wie z.B. eine einfache Klemmvorrichtung verwendet werden, die mobil gestaltet und damit der erfindungsgemässen Vorrichtung 10 besonders einfach zuführbar ist.

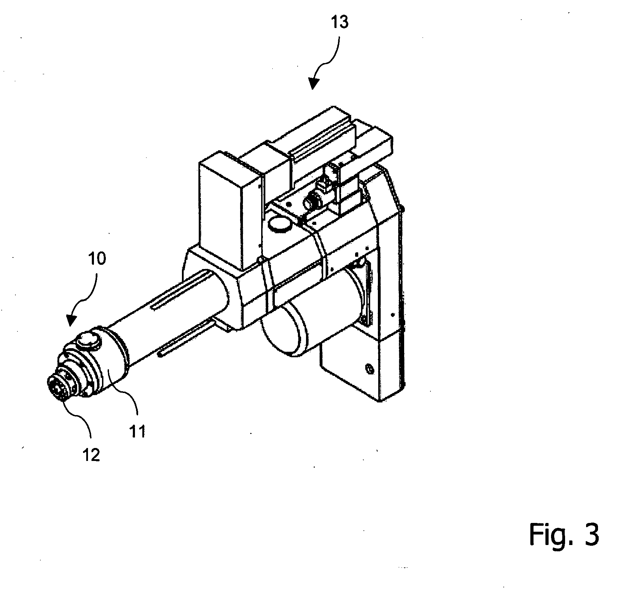

Die Figur 3 zeigt eine räumliche Ansicht der erfindungsgemässen Vorrichtung 10 der Figuren 1 und 2 mit einem Antriebsmittel 13 (bei entferntem Ausgleichsmittel 14) von schräg oben gesehen. Das Antriebsmittel 13 umfasst dabei verschiedene Motoren und Übersetzungsgetriebe zum Drehen und Verfahren des Fräskopfs 11 unabhängig vom Drehen des Wirbelrings 12 der Vorrichtung 10.

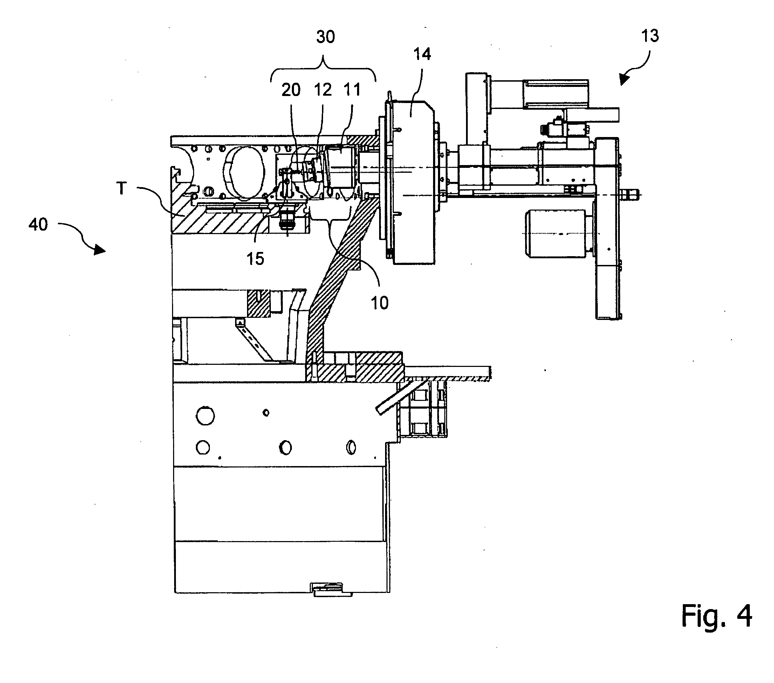

Die Figur 4 zeigt eine geschnittene Seitenansicht eines erfindungsgemässen Systems 40 zum Bearbeiten eines stehenden Werkstücks 20 in einem Rundtaktautomaten. Dieser umfasst mehrere Bearbeitungsstationen für stehende Werkstücke 20, von denen hier die erfindungsgemässe Station 30 der Figur 2 in Einbauposition gezeigt ist. Das Werkstück 20 ist dabei in einer Haltevorrichtung 15 am Umfang eines runden Bearbeitungstischs T (Table) eingespannt und wird der Station 30 über eine Drehung des Tischs T zur Verfügung gestellt. Über die Antriebs- und Ausgleichsmittel 13, 14 wird die Bearbeitungsvorrichtung 10 der Station 30 in eine Vorschub- und Ausgleichsbewegung versetzt, bei welcher der am Fräskopf 11 exzentrisch und geneigt und/oder gekippt angebrachte Wirbelring 12 in einer Taumelbewegung um das Werkstück 20 geführt wird. Die Fräszähne des Rings 12 verlaufen dabei so im Material, dass an dem Werkstück 20 ein Aussengewinde geschnitten wird, ohne dass dieses selbst bewegt werden muss. Das Ausgleichsmittel 14 führt dabei eine zweiachsige Ausgleichsbewegung in einer Ebene durch, die senkrecht zur Ebene der Figur 4 verläuft, um z.B. Justierfehler zwischen Werkzeuglängsachse und der Fräskopflängsachse zu korrigieren. Nach Fertigstellung des Gewindes am Werkstück 20 wird die Bearbeitungsvorrichtung 10 zurückgezogen, so dass die Haltevorrichtung 15 mit dem darin eingespannten Werkzeug 20 an eine nachfolgende Station weitergereicht werden kann, in dem der Bearbeitungstisch T gedreht wird.

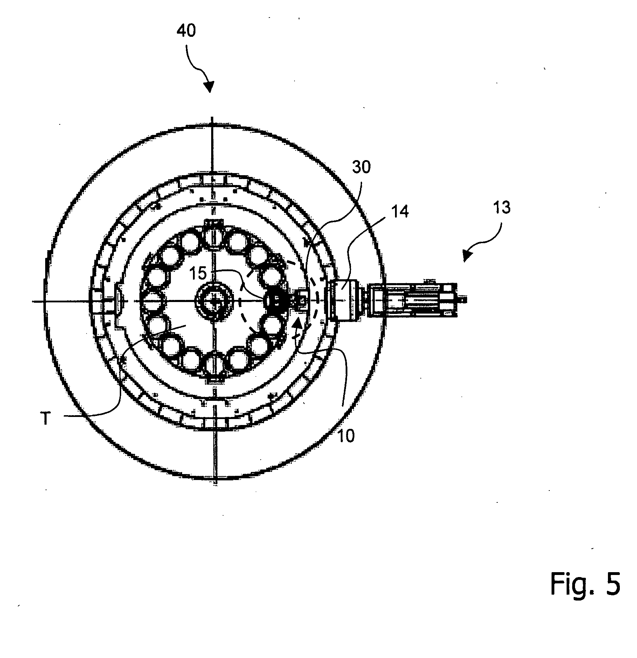

Die Figur 5 zeigt eine Draufsicht auf das System 40 der Figur 4 mit einer darin sichtbaren Station 30 der Figur 2. Die Station 30 wird dabei gebildet aus einer Bearbeitungsvorrichtung 10, welcher eine Haltevorrichtung 15 an mit einem darin eingespannten Werkstück zugeführt wird, die wiederum an dem Umfang des runden Bearbeitungstischs T montiert ist. Das Werkstück kann durch Drehung des Bearbeitungstischs unterschiedlichen Bearbeitungsstationen zugeführt werden, wobei erfindungsgemäss erstmals auch ein Aussengewinde in einem Rundtaktautomaten fräsbar ist.

Dabei ist die erfindungsgemässe Station 30 nicht auf das Fräsen von Gewinden eingeschränkt, sondern es können, abhängig von der gegenseitigen Achsausrichtung von Werkstück und Fräskopf, sowie abhängig vom Kippen und Neigen der Schnittachsen im Arbeitspunkt des Fräswerkzeugs, auch andere Aussenkonturen am Werkstück realisiert werden. Der Einsatz eines Wirbelrings lässt dabei eine besonders präzise und effiziente Realisierung unterschiedlichster Aussenkonturen am Werkstück zu. Die erfindungsgemässe Verwendung des Verfahrens in einem Rundtaktautomaten macht die automatisierte Fertigung von komplexen Werkstücken auf kostengünstige Art und Weise möglich.

## Patentansprüche

1. Vorrichtung (10) zum Bearbeiten eines feststehenden Werkstücks (20), mit einem zylinderförmigen Fräskopf (11), der um seine Längsachse (ZH) drehbar und entlang dieser Längsachse (ZH) linear verfahrbar gelagert ist, und mit einem exzentrisch an diesem Fräskopf (11) angeordneten, um eine Drehachse (ZT) drehbar gelagerten Fräswerkzeug zum Bearbeiten des Werkstücks (20) an einem Arbeitspunkt (WP) am Umfang des Werkzeugs, welcher in einer jeweiligen Drehstellung des Fräskopfs (11) den kürzesten Abstand zu dessen Längsachse (ZH) aufweist, **dadurch gekennzeichnet dass** das Werkzeug derart ausgerichtet ist, dass in jeder Drehstellung des Fräskopfs (11) die Drehachse (ZT) des Werkzeugs aus einer Richtung der Längsachse (ZH) heraus in einem vorbestimmten ersten Winkel (Ax) um eine erste Achse (X) gekippt ist, die in radialer Richtung des Werkzeugs durch den besagten Arbeitspunkt (WP) verläuft.

2. Vorrichtung (10) nach Anspruch 1, bei welcher die Drehachse (ZT) des Fräswerkzeugs zudem in einem vorbestimmten zweiten Winkel (Ay) aus der Richtung der gekippten Drehachse (ZT') heraus um eine zweite Achse (Y) geneigt ist, die in Umfangsrichtung des Werkzeugs durch den besagten Arbeitspunkt (WP) verläuft.

3. Vorrichtung (10) nach Anspruch 1 oder 2, bei welcher das Fräswerkzeug als Wirbelring (12) ausgebildet ist, und die Längsachse (ZH) des Fräskopfs (11) die Öffnungsfläche (S) des Wirbelrings (11) beabstandet zu dessen Drehachse (ZT) durchtritt, so dass der Arbeitspunkt (WP) des Rings (11) an dessen Innenumfang liegt.

4. Vorrichtung (10) nach einem der vorstehenden Ansprüche, mit Antriebsmitteln (13), über welche der Fräskopf (11) abhängig von dem vorbestimmten ersten und/oder zweiten Winkel (Ax, Ay) des Fräswerkzeugs (12) in eine koordinierte Vorschub- und Drehbewegung versetzbar ist, so dass der Arbeitspunkt (WP) des Werkzeugs (12) eine spiralförmige Bewegungsbahn beschreibt.

5. Vorrichtung (10) nach einem der vorstehenden Ansprüche, bei welcher der Fräskopf (11) und/oder das Fräswerkzeug (12) als jeweils austauschbare Einheit mit standardisiertem Anschluss für Antriebsmittel (13) ausgebildet sind.

6. Vorrichtung (10) nach einem der vorstehenden Ansprüche, mit Ausgleichsmitteln (14), die zum Detektieren und Kompensieren von Abweichungen des Arbeitspunkts (WP) des Fräswerkzeugs (12) von einer vorgegebenen Bewegungsbahn ausgelegt sind.

7. Vorrichtung (10) nach Anspruch 6, bei welcher die Ausgleichsmittel (14) eine Lagerung des Fräskopfs (11) an Schlitten umfassen, welche in zwei senkrecht zur Längsachse (ZH) des Fräskopfs (11) stehenden Raumrichtungen verfahrbar ist.

8. Station (30) zum Bearbeiten eines stehenden Werkstücks (20), umfassend eine Vorrichtung (10) nach einem der vorstehenden Ansprüche und eine Haltevorrichtung (15) für das stehende Werkstück (20).

9. Station (30) nach Anspruch 8, bei welcher eine Längsachse (ZH) des Werkstücks (20) auf eine Längsachse (ZH) des Fräskopfs (11) ausgerichtet ist.

10. System zum getakteten Bearbeiten von stehenden Werkstücken (20), umfassend wenigstens eine Station (30) nach Anspruch 8 oder 9.

11. System nach Anspruch 10, welches als Rundtaktautomat (40) ausgebildet ist.

12. Verfahren zum Bearbeiten eines feststehenden Werkstücks (20), bei dem ein rotierendes Fräswerkzeug in eine spiralförmige Bewegungsbahn um eine Längsachse (ZH) gebracht und dabei in eine Taumelbewegung versetzt wird, **dadurch gekennzeichnet dass** entlang seiner gesamten Bewegungsbahn eine Drehachse (ZT) des Werkzeugs aus einer Richtung der Längsachse (ZH) heraus um einen vorbestimmten ersten Winkel (Ax) um eine erste Achse (X) gekippt ist, die in radialer Richtung des Werkzeugs durch einen Arbeitspunkt (WP) am Umfang des Werkzeugs verläuft, der den kürzesten Abstand zu der Längsachse (ZH) aufweist.

13. Verfahren nach Anspruch 12, bei dem das rotierende Fräswerkzeug in eine Taumelbewegung versetzt wird, so dass entlang der gesamten Bewegungsbahn eine Drehachse (ZT) des Werkzeugs aus einer Richtung der gekippten Drehachse (ZT') heraus zudem um einen vorbestimmten zweiten Winkel um eine zweite Achse (Y) geneigt ist, die in Umfangsrichtung des Werkzeugs durch den besagten Arbeitspunkt (WP) verläuft.

14. Verfahren nach Anspruch 12 oder 13, bei dem das Werkstück (20) so zu dem Fräswerkzeug ausgerichtet und feststehend gehalten wird, dass der besagte Arbeitspunkt (WP) wenigstens an einem Teilumfang des Werkstücks (20) spanabhebend in dessen Material eintritt.

15. Verfahren nach Anspruch 12 bis 14, bei dem der erste und/oder der zweite Winkel (Ax, Ay) des Fräswerkzeugs durch Austauschen eines Fräskopfs (11) eingestellt wird, an dem das Werkzeug drehbar gelagert gehalten ist.

16. Verfahren nach einem der Ansprüche 12 bis 15, bei dem mit dem ersten Winkel (Ax) des Fräswerkzeugs eine Gewindesteigung und/oder mit dem zweiten Winkel (Ay) des Fräswerkzeugs ein Gewindeprofil eingestellt wird, das an dem Werkstück (20) gefräst werden soll.

17. Verwendung einer Vorrichtung (10) nach einem der Ansprüche 1 bis 7 zum Gewindeschneiden von Schrauben, insbesondere von Knochen- und/oder Holzschrauben.

## Claims

1. A device (10) for the machining of a stationary workpiece (20), with a cylindrical milling head (11), which can be rotated about its longitudinal axis (ZH), and which is mounted such that it can be linearly traversed along the said longitudinal axis (ZH), and with a milling tool for purposes of machining the workpiece (20) at a working point (WP) on the periphery of the tool, the milling tool being arranged eccentrically on the said milling head (11), and mounted such that it can be rotated about an axis of rotation (ZT), the working point in a particular rotational position of the milling head (11) having the shortest distance to the latter's longitudinal axis (ZH),
**characterised in that**,
the tool is aligned such that in each rotational position of the milling head (11) the axis of rotation (ZT) of the tool is tilted away from the direction of the longitudinal axis (ZH) at a predetermined first angle (Ax) about a first axis (X), which axis runs in the radial direction of the tool through the said working point (WP).

2. The device (10) in accordance with Claim 1,
in which the axis of rotation (ZT) is moreover inclined at a predetermined second angle (Ay) away from the direction of the tilted axis of rotation (ZT') about a second axis (Y), which axis runs in the peripheral direction of the tool through the said working point (WP).

3. The device (10) in accordance with Claim 1 or 2,
in which the milling tool is designed as an annular ring (12), and the longitudinal axis (ZH) of the milling head (11) passes through the aperture surface (S) of the annular ring (11) at a distance from the latter's axis of rotation (ZT), such that the working point (WP) of the ring (11) lies on the latter's inner periphery.

4. The device (10) in accordance with one of the preceding claims,
with drive means (13), via which the milling head (11), depending upon the predetermined first and/or second angle (Ax, Ay) of the milling tool (12), can be displaced in a coordinated feed and rotation movement, such that the working point (WP) of the tool (12) describes a spiral motion path.

5. The device (10) in accordance with one of the preceding claims,
in which the milling head (11) and/or the milling tool (12) are each designed as a replaceable unit with a standardised connection for drive means (13).

6. The device (10) in accordance with one of the preceding claims,
with compensation means (14), which are designed for purposes of detecting and compensating for deviations of the working point (WP) of the milling tool (12) from a prescribed motion path.

7. The device (10) in accordance with Claim 6,
in which the compensation means (14) comprise a mounting of the milling head (11) on a carriage, which can be traversed in two spatial directions standing at right angles to the longitudinal axis (ZH) of the milling head (11).

8. A station (30) for purposes of machining a stationary workpiece (20), comprising a device (10) in accordance with one of the preceding claims, and a holding device (15) for the stationary workpiece (20).

9. The station (30) in accordance with Claim 8,
in which a longitudinal axis (ZH) of the workpiece (20) is aligned with a longitudinal axis (ZH) of the milling head (11).

10. A system for the cyclic machining of stationary workpieces (20), comprising at least one station (30) in accordance with Claim 8 or 9.

11. A system in accordance with Claim 10, which is designed as an automatic rotary transfer machine (40).

12. A method for the machining of a stationary workpiece (20),
in which a rotating milling tool is brought into a spiral motion path about a longitudinal axis (ZH), and is thereby displaced into a wobbling motion,
**characterised in that**,
along the whole of its motion path an axis of rotation (ZT) of the tool is tilted away from the direction of the longitudinal axis (ZH) at a predetermined first angle (Ax) about a first axis (X), which runs in the radial direction of the tool through a working point (WP) on the periphery of the tool, the working point having the shortest distance to the longitudinal axis (ZH).

13. The method in accordance with Claim 12,
in which the rotating milling tool is displaced into a wobbling movement, such that along the whole of the motion path an axis of rotation (ZT) of the tool is inclined at a predetermined second angle away from the direction of the tilted axis of rotation (ZT') about a second axis (Y), which axis runs in the peripheral direction of the tool through the said working point (WP).

14. The method in accordance with Claim 12 or 13,
in which the workpiece (20) is aligned relative to the milling tool and held in a stationary manner, such that the said working point (WP) on at least part of the periphery of the workpiece (20) enters the material of the latter in a chip removing manner.

15. The method in accordance with Claims 12 to 14,
in which the first and/or the second angle (Ax, Ay) of the milling tool is adjusted by replacing a milling head (11) on which the tool is held, mounted such that it can rotate.

16. The method in accordance with one of the Claims 12 to 15,
in which a thread pitch is adjusted with the first angle (Ax) of the milling tool, and/or a thread profile is adjusted with the second angle (Ay) of the milling tool, which thread pitch and/or profile is to be milled into the workpiece (20).

17. The use of a device (10) in accordance with one of the Claims 1 to 7,
for cutting the threads of screws, in particular of bone screws and/or wood screws.

## Revendications

1. Dispositif (10) destiné à usiner une pièce fixe (20), comprenant une tête de fraisage (11) cylindrique qui est placée en pouvant tourner sur son axe longitudinal (ZH) et en pouvant se déplacer de façon linéaire le long de cet axe longitudinal (ZH), et comprenant un outil de fraisage disposé de façon excentrique sur cette tête de fraisage (11), en pouvant tourner sur un axe de rotation (ZT), pour usiner la pièce (20) sur un point de fonctionnement (WP) sur le pourtour de l'outil, lequel présente, dans une position de rotation respective de la tête de fraisage (11), la distance la plus courte par rapport à son axe longitudinal (ZH), **caractérisé en ce que** l'outil est ainsi aligné qu'à chaque position de rotation de la tête de fraisage (11), l'axe de rotation (ZT) de l'outil est basculé d'une direction de l'axe longitudinal (ZH) dans un premier angle (Ax) prédéfini sur un premier axe (X) qui passe à travers ledit point de fonctionnement (WP) dans le sens radial de l'outil.

2. Dispositif (10) selon la revendication 1, dans lequel l'axe de rotation (ZT) de l'outil de fraisage est en outre incliné, dans un second angle (Ay) prédéfini, du sens de l'axe de rotation basculé (ZT') sur un second axe (Y) qui passe à travers ledit point de fonctionnement (WP) dans le sens périphérique de l'outil.

3. Dispositif (10) selon la revendication 1 ou 2, dans lequel l'axe de rotation de l'outil de fraisage est conçu en tant qu'anneau de tourbillonnement (12) et l'axe longitudinal (ZH) de la tête de fraisage (11) traverse la surface d'ouverture (S) de l'anneau de tourbillonnement (11) à distance de son axe de rotation (ZT), de telle sorte que le point de fonctionnement (WP) de l'anneau (11) repose sur son pourtour intérieur.

4. Dispositif (10) selon l'une des revendications précédentes, comprenant des moyens d'entraînement (13) via lesquels la tête de fraisage (11) peut être déplacée, en fonction des premier et/ou second angles (Ax, Ay) prédéfinis de l'outil de fraisage (12), dans un mouvement d'avancée et de rotation coordonné, de telle sorte que le point de fonctionnement (WP) de l'outil (12) décrit une trajectoire hélicoïdale.

5. Dispositif (10) selon l'une des revendications précédentes, dans lequel la tête de fraisage (11) et/ou l'outil de fraisage (12) sont conçus en tant qu'unité respectivement interchangeable avec un raccordement normalisé pour des moyens d'entraînement (13).

6. Dispositif (10) selon l'une des revendications précédentes, comprenant des moyens de compensation (14) qui sont conçus pour détecter et compenser des écarts du point de fonctionnement (WP) de l'outil de fraisage (12) par rapport à une trajectoire donnée.

7. Dispositif (10) selon la revendication 6, dans lequel les moyens de compensation (14) comprennent un appui de la tête de fraisage (11) sur des chariots qui peuvent se déplacer dans deux directions spatiales verticales à l'axe longitudinal (ZH) de la tête de fraisage (11).

8. Poste (30) destiné à l'usinage d'une pièce fixe (20), comprenant un dispositif (10) selon l'une des revendications précédentes et un dispositif de fixation (15) pour la pièce fixe (20).

9. Poste (30) selon la revendication 8, dans lequel un axe longitudinal (ZH) de la pièce (20) est aligné sur un axe longitudinal (ZH) de la tête de fraisage (11).

10. Système destiné à l'usinage cadencé de pièces fixe (20), comprenant au moins un poste (30) selon la revendication 8 ou 9.

11. Système selon la revendication 10, qui est conçu en tant que machine à transfert rotatif (40).

12. Procédé destiné à l'usinage d'une pièce fixe (20), dans lequel un outil de fraisage rotatif est amené sur un axe longitudinal (ZH) dans une trajectoire hélicoïdale et est alors déplacé en nutation, **caractérisé en ce que** le long de la totalité de sa trajectoire, un axe de rotation (ZT) de l'outil est basculé d'une direction de l'axe longitudinal (ZH) sur un premier angle (Ax) prédéfini sur un premier axe (X) qui passe à travers un point de fonctionnement (WP) dans le sens radial de l'outil sur le pourtour de l'outil qui présente la distance la plus courte par rapport à l'axe longitudinal (ZH).

13. Procédé selon la revendication 12, dans lequel l'outil de fraisage rotatif est déplacé en nutation, de telle sorte que le long de la totalité de la trajectoire, un axe de rotation (ZT) de l'outil d'une direction de l'axe de rotation (ZT') basculé est incliné en outre sur un second angle prédéfini sur un second axe (Y) qui passe à travers ledit point de fonctionnement (WP) dans le sens périphérique de l'outil.

14. Procédé selon la revendication 12 ou 13, dans lequel la pièce (20) est ainsi alignée par rapport à l'outil de fraisage en étant maintenue fixe que ledit point de fonctionnement (WP) pénètre au moins dans le matériau de la pièce (20) par enlèvement de copeaux, dans un contour partiel de celle-ci.

15. Procédé selon la revendication 12 à 14, dans lequel les premier et/ou second angles (Ax, Ay) de l'outil de fraisage est/sont réglé(s) par le changement d'une tête de fraisage (11) sur laquelle la pièce est fixée en pouvant tourner.

16. Procédé selon l'une des revendications 12 à 15, dans lequel avec le premier angle (Ax) de l'outil de fraisage, un pas de vis et/ou avec le second angle (Ay) de l'outil de fraisage, un profilé fileté est/sont réglé(s), qui peu(ven)t être fraisé(s) sur la pièce (20).

17. Emploi d'un dispositif (10) selon l'une des revendications 1 à 7 pour couper des filetages de vis, en particulier de vis pour os et/ou de vis à bois.
